(19) **Europäisches Patentamt / European Patent Office / Office européen des brevets**

(11) **EP 4 323 737 B1**

(12) **EUROPEAN PATENT SPECIFICATION**

(45) Date of publication and mention
of the grant of the patent:
**05.11.2025 Bulletin 2025/45**

(21) Application number: **22719441.2**

(22) Date of filing: **05.04.2022**

(51) International Patent Classification (IPC):
***G01K 7/42*** *(2006.01)*

(52) Cooperative Patent Classification (CPC):
**G01K 7/42**

(86) International application number:
**PCT/US2022/023385**

(87) International publication number:
**WO 2022/221090 (20.10.2022 Gazette 2022/42)**

(54) **TECHNIQUE FOR ESTIMATION OF INTERNAL BATTERY TEMPERATURE**

VERFAHREN ZUR SCHÄTZUNG DER TEMPERATUR EINER INTERNEN BATTERIE

TECHNIQUE D'ESTIMATION DE LA TEMPÉRATURE INTERNE D'UNE BATTERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.04.2021 US 202163174623 P
14.04.2021 US 202163174646 P
04.04.2022 US 202217712416**

(43) Date of publication of application:
**21.02.2024 Bulletin 2024/08**

(73) Proprietor: **Analog Devices, Inc.
Wilmington, MA 01887 (US)**

(72) Inventors:
• **TANOVIC, Omer
Wilmington, Massachusetts 01887 (US)**
• **YAUL, Frank
Wilmington, Massachusetts 01887 (US)**
• **GULLAPALLI, Hemtej
Wilmington, Massachusetts 01887 (US)**

(74) Representative: **Hunter, Christopher Jack Owen
Withers & Rogers LLP
2 London Bridge
London SE1 9RA (GB)**

(56) References cited:
EP-A1- 3 876 334     WO-A1-2020/204584
WO-A1-2022/055619     US-A1- 2013 314 049

# EP 4 323 737 B1

**Description**

FIELD OF THE DISCLOSURE

This disclosure relates generally to battery temperature monitoring and, more particularly, to a technique for estimating internal temperature of a battery using terminal impedance measurements. An example of battery temperature monitoring is disclosed in US 2013/314049 A1.

BRIEF DESCRIPTION OF THE DRAWINGS

To provide a more complete understanding of the present disclosure and features and advantages thereof, reference is made to the following description, taken in conjunction with the accompanying figures, wherein like reference numerals represent like parts, in which:

FIGs. 1A and 1B are simplified diagrams illustrating use of multivariable polynomial regression for estimating the internal temperature of a battery using terminal impedance measurements taken at multiple frequencies of an injected sinusoidal current in accordance with features of embodiments described herein;

FIG. 2 is a flow diagram illustrating operation of a system in which multivariable polynomial regression is used for estimating the internal temperature of a battery using terminal impedance measurements taken at multiple frequencies of an injected sinusoidal current in accordance with features of embodiments described herein;

FIG. 3 is a flow diagram illustrating an example of single measurement factory calibration of a battery model in accordance with features of embodiments described herein;

FIG. 4A is a flow diagram illustrating an alternative embodiment in which singular value decomposition (SVD)-based calibration may be used in connection with techniques for estimating an internal temperature of a battery using impedance measurements in accordance with features of embodiments described herein;

FIG. 4B is a flow diagram illustrating details of SVD calibration for use in connection with techniques for estimating an internal temperature of a battery using impedance measurements in accordance with features of embodiments described herein;

FIG. 5A is a block diagram illustrating an embodiment in which multiple different polynomial regression models may be used for estimating an internal temperature of a battery using impedance measurements in accordance with features of embodiments described herein;

FIG. 5B is a flow diagram illustrating an example operation in which multiple different polynomial regression models may be used for estimating an internal temperature of a battery using impedance measurements in accordance with features of embodiments described herein; and

FIG. 6 is a block diagram of a computer system that may be used to implement all or some portion of the system for estimating an internal temperature of a battery using impedance measurements in accordance with features of embodiments described herein

DETAILED DESCRIPTION OF EXAMPLE EMBODIMENTS

Lithium-ion batteries are rechargeable batteries that are commonly used for portable electronics and electric vehicles (EVs), as well as a variety of other applications, such military and aerospace applications. In order to monitor and maximize the performance of lithium-ion batteries, it is critical to monitor the internal temperature of such batteries during a variety of operations, such as fast charge and rapid discharge operations.

For larger batteries, such as EV batteries, the internal temperature of the battery has previously been monitored using thermal sensors, such as thermocouples, placed on the surface of the battery to monitor the surface temperature of the battery. This solution is non-ideal due to the delay in heat conductivity from the battery's internal core to the surface temperature, as well as the cost and complexity of implementing the necessary thermocouple network in connection with the battery.

For smaller batteries, such as those used in portable electronics such as cellular telephones, electrochemical impedance spectrometry (EIS) may be used to measure battery impedance and internal temperature is estimated using polynomial regression models based on an impedance measurement at a single empirically selected frequency. This solution is also non-ideal given that it does not compensate for battery state-of-health (SOH) or state-of-charge (SOC). Additionally, this method models impedance as a function of frequency and temperature averaged over SOC and has a high computational cost, given that it needs to solve an optimization problem at every step.

In accordance with features of embodiments descried herein, the internal temperature of a rechargeable battery, such as a lithium-ion battery, may be estimated using terminal impedance measurements made at multiple frequencies. The terminal impedance measurements may be combined using multivariable polynomial regression thereby to reduce the effects of state-of-charge (SOC) and state-of-health (SOH) variation on the temperature estimate as compared to estimates based on terminal impedance measurements made at a single frequency.

In one embodiment, an internal temperature estimate may include the weighted sum of polynomial functions of the phases of the impedance measured at each of several predetermined frequencies, which predetermined frequencies may be elected to span a range over which there is sufficient temperature-, SOC-, and SOH-dependence variation to allow the weighted sum to work toward "canceling out" the impact of SOC and SOH variation on the final temperature estimate. In certain embodiments, the equation comprising the regression model may be a linear function of its unknown parameters (e.g., the weights in the sum), such that the model parameters may be fit at low computational cost using linear least squares. Embodiments described herein may also have a relatively low computational cost, enabling the algorithm to be executed on embedded systems and/or processors. In certain embodiments, the regression equation may be augmented with additional terms, such as polynomial functions of cell capacity or terminal voltage, or cross-terms comprising the product of any aforementioned term. The unknown parameters of the regression equation may be calibrated based on prior measurements. For example, a database, or library, of pre-fit battery models may be created and the nearest-neighbor model for a battery may be selected based on a "factory calibration" impedance measurement made when the battery is at specified known conditions.

Embodiments described herein enable a lower-cost, less-intrusive battery temperature monitoring solution as compared with surface-mounted thermocouples. Additionally, as compared with other battery temperature estimation techniques that use polynomial regression based on an impedance measurement at a single frequency, embodiments described herein enable lower computational cost, require fewer model parameters, and provide the ability to reduce or cancel out the effects of SOH and SOC variation on temperature estimation. Additionally terminal voltage and/or cell capacity measurements may be added as inputs to the regression equation to further reduce the effects of SOH and SOC on the temperature estimate.

Monitoring of internal battery temperature is critical for improving battery performance. Monitoring enables maintenance of cell temperature within prescribed boundaries or ranges (maximum and minimum) during fast charging, limitation of current to avoid overheating during rapid discharge, and prevention of damage to a battery due to abnormal usage to ensure safety.

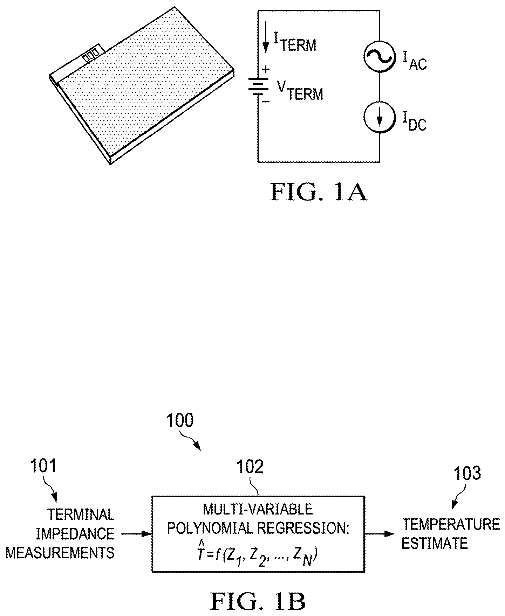

As previously noted, and as generally illustrated in FIG. 1A, in accordance with features of embodiments described herein, multivariable polynomial regression is used to estimate the internal temperature of a battery (such as a lithium-ion battery) using terminal impedance measurements taken at multiple frequencies of an injected sinusoidal current. In certain embodiments, the frequencies for use are identified based on a type of battery. For a given battery type, different frequencies have different temperature-, SOC-, and SOH-dependencies; therefore, multiple frequencies having different such dependencies are ideally selected. As a result, the estimation system is less sensitive to the exact frequencies used as compared to single-frequency regression techniques.

FIG. 1B illustrates a block diagram of a system 100 for using multivariable polynomial regression to estimate the internal temperature of a battery from impedance measurements at multiple frequencies in accordance with one embodiment. As shown in FIG. 1B, terminal impedance measurements taken at a variety of frequencies (designated in FIG. 1B by a reference numeral 101) are input to a multivariable polynomial regression module 102, the output of which is an internal battery temperature estimate. In accordance with features of embodiments described herein, the module 102 implements a multivariable polynomial regression equation that combines the received terminal impedance measurements 101 in a manner that cancels out SOC- and SOH-dependencies to produce an internal temperature estimate 103. No optimization during estimation is required. As described in greater detail below, in some embodiments, the regression equation implemented by the module 102 may be calibrated to a particular battery instance using a small set of measurements from the battery.

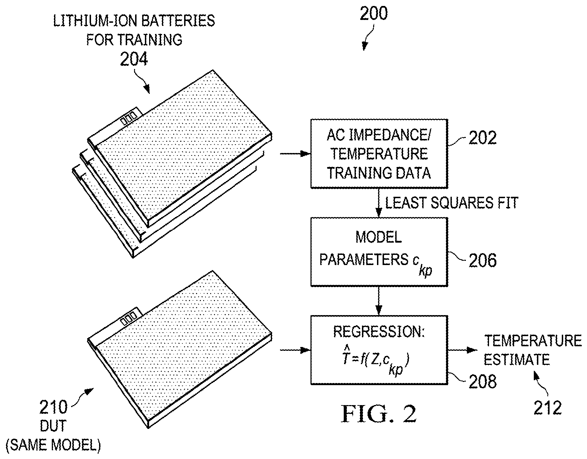

FIG. 2 is a flowchart 200 illustrating operation of the system 100. In step 202, a number of batteries 204 are used to generate training data comprising AC impedance and temperature data. During training, the batteries 204 are cycled many times at a constant current, with temperature varying between cycles and AC impedance (Z) being measured during discharge. In step 206, model parameters ($c_0$, $c_{kp}$) are empirically fit using linear least squares applied to the training data accumulated in step 202. The model parameters generated in step 206 are used in a regression equation in step 208, which regression equation is applied to terminal impedance measurements of a device under test (DUT) 210 (which is the same model as the batteries 204) at multiple frequencies f to estimating an internal temperature 212 of the DUT.

In one embodiment, the multivariable polynomial regression equation may be expressed as follows:

$$\widehat{T} = c_0 + \sum_{k=0}^{K} \sum_{p=1}^{P} c_{kp}(\phi[k])^p$$

The temperature T is estimated using a multivariable polynomial regression on Z phase measurements $\phi[k]$ where k is the frequency index. In certain embodiments, the multivariable polynomial regression is a third order polynomial regression using multiple frequencies k (e.g., 20Hz, 60Hz, and 200Hz) selected to cancel out SOC- and SOH-dependencies, and 10 learned parameters.

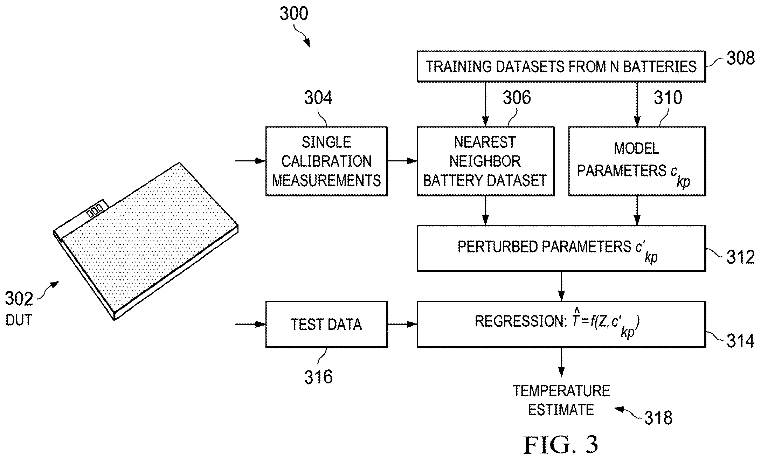

FIG. 3 illustrates a flow diagram 300 showing an example of single measurement factory calibration of a DUT comprising a battery 302. It will be recognized that, although single measurement calibration is shown and described, multiple measurement calibration may be implemented depending on the implementation. As shown in FIG. 3, a single calibration measurement comprising one set of impedance measurements taken at the beginning of the life of the DUT 302 under known conditions (e.g., 25 degrees C, 100% SOC) is taken in step 304. In step 306, a nearest-neighbor dataset in a dataset library 308, which includes training datasets from N batteries, is identified, e.g., using the least squared distance between the initial impedance measurements taken at the known conditions.

In step 310, model parameters $c_{kp}$ are also obtained from the dataset library 308. In step 312, the model parameters obtained in step 310 are perturbed to fit the nearest-neighbor dataset 306 as follows:

1.

$$T_{res} = f(Z, c_{kp}) - T_{true}$$

2. Fit ($T_{res}$, Z) dataset using the same polynomial model, with L2 regularization:

$$T_{res} = d_0 + \sum_{k,p} d_{kp}(\phi[k])^p$$

3.

$$c'_{kp} = c_{kp} - d_{kp}$$

The perturbed parameters $c_{kp}$' are used in the regression model 314 applied to test data 316 (i.e., impedance measurements) obtained from the DUT 302 to generate a temperature estimate 318.

In accordance with features of embodiments described herein, other inputs, such as terminal voltage ($V_{term}$) may be added to the regression equation. For example, $V_{term}$ (or other real-valued measurements) may simply be appended to the list of phase measurements $\phi[k]$, which is equivalent to:

$$\hat{T} = c_0 + \sum_{k,p} c_{kp}(\phi[k])^p + \sum_{n} c_n V_{term}^n$$

$V_{term}$ may compensate for SOC dependence; charge capacity $Q_{tot}$ may also be added in a similar manner to compensate for SOH dependence.

Additionally, higher-order cross-terms may be added into the regression equation; for example:

$$\hat{T} = c_0 + \sum_{k,p} c_{kp}(\phi[k])^p + \sum_{\theta=(k_1,k_2,p_1,p_2)} c_\theta(\phi[k_1])^{p_1}(\phi[k_2])^{p_2}$$

Cross-terms may be limited to $p_1 = p_2 = 1$. Additionally, cross-terms may be used with $Vt_{erm}$ or other real-valued measurements as described above.

As described herein, using multivariable polynomial regression to estimate temperature directly from terminal impedance measurements (and optionally other measurements such as terminal voltage and cell capacity) provides improved accuracy over a single measurement taken at a single frequency and operates to cancel the influence of SOH and SOC due to the fact that the influence of SOH and SOC varies with frequency. Additionally, terminal voltage may be used in order to improve estimates at low SOC. Still further, embodiments described herein are less sensitive to exactly what frequencies are used; therefore, there is no need to identify an "optimal" frequency with minimal SOH and SOC dependence.

Moreover, embodiments described herein do not require whole frequency sweep, thereby enabling reduced measurement time; remain linear-in-coefficients to allow for a linear least squares solution; and require a low number of parameters, thereby reducing the amount of data needed to fit.

In the calibration method shown in and described with reference to FIG. 3, the distance metric $d_i$ between the library dataset i and the calibration data is defined as the squared distance between initial impedance measurements taken at known conditions:

$$d_i = |z_{cal} - z_{lib,i}|^2$$

where $z_{cal}$ is the impedance from the single calibration measurement, and $z_{lib,i}$ is the impedance from the ith dataset in the dataset library. Both $z_{cal}$ and $z_{lib,i}$ are measured at the same operating conditions (e.g., same temperature, same SOC, similar SOH).

Alternatively, to determine the nearest-neighbor dataset in a dataset library, instead of defining the distance metric $d_i$ as the squared distance between impedance measurements, $d_i$ may be defined as the mean square error (MSE) that a perturbed model i achieves on the calibration dataset:

$$d_i = \sum_j \left( f\left(z_{cal,j}, c'_{kp,i}\right) - T_{cal,j} \right)^2$$

where $z_{cal,j}$ and $T_{cal,j}$ represent the impedance and temperature of datapoint $j$ in the calibration dataset. The calibration dataset could contain just one datapoint, or multiple datapoints, depending on what is available in the use case. $c'_{kp,i}$ represents the model coefficients that are perturbed to better fit dataset i in the dataset library, as described above. $f\left(z_{cal,j}, c'_{kp,i}\right)$ represents the perturbed model with coefficients $c'_{kp,i}$ applied to input data $z_{cal,j}$ to yield a temperature estimate. Note that $f\left(z_{cal,j}, c'_{kp,i}\right)$ is not limited to having the input data be only impedance; the input data can include other measurements or estimates (e.g. voltage, SOC, capacity) and the regression equation can include other terms (e.g. voltage, SOC, capacity, cross-terms) as previously described. In general, other distance metrics $d_i$ may be used to determine the nearest-neighbor dataset based on the calibration data.

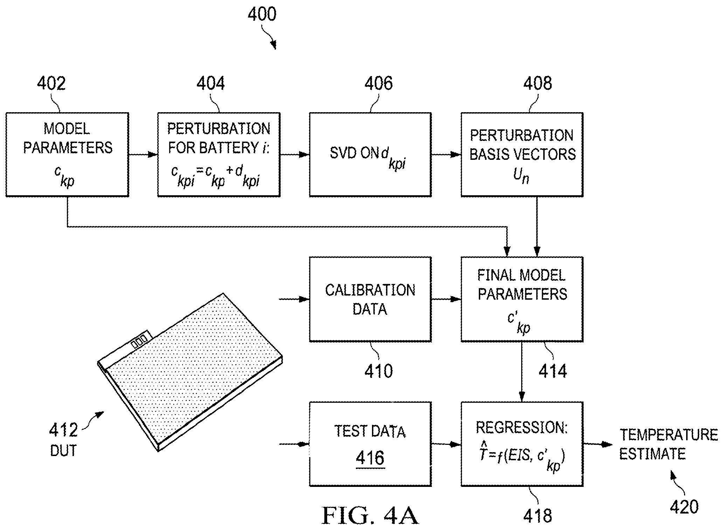

Referring to FIG. 4A, in an alternative embodiment, singular value decomposition (SVD)-based calibration may be used, as illustrated in a flowchart 400. Using the existing training dataset, model parameters are obtained (step 402) and perturbations are determined for each battery that improve the fit (step 404). SVD is applied to the model perturbations (step 406) to determine perturbation basis vectors $b_n$ (step 408) that can be used to better fit a calibration dataset 410 for a DUT 412 to develop final model parameters (step 414) to be applied to the regression model.

In step 416, the regression model is applied to test data 418 for the DUT 412 to develop a temperature estimate 420.

In accordance with features of embodiments described herein, other inputs, such as battery state-of-charge (SOC) may be added to the regression equation. These inputs do not have to be measured directly, like other real-valued measurements (such as, battery terminal voltage) from the battery or other parts of the system that include the battery. For example, battery state-of-charge SOC may simply be appended to the list of phase measurements $\phi[k]$, which is equivalent to:

$$\hat{T} = c_0 + \sum_{k,p} c_{kp}(\phi[k])^p + \sum_q c_q SOC^q.$$

In accordance with features of embodiments described herein, other inputs, such as functions of other real-valued battery measurements, may be added to the regression equation. For example, let function $f(\cdot)$ describe the map from terminal voltage to an estimate of SOC, that is $SOC = f(V_{term})$. Then input $f(V_{term})$ may simply be appended to the list of phase measurements $\phi[k]$, which is equivalent to:

$$\hat{T} = c_0 + \sum_{k,p} c_{kp}(\phi[k])^p + \sum_r c_r f(V_{term})^r.$$

Additionally, memory terms can be added to the regression equation. For example, past temperature estimates, past input variables, or cross-terms with these memory terms can be added. For example, when history of phase measurements $\phi[k]$, $\phi[k - 1]$, ... , $\phi[k - M]$ are used, the regression equation may have the following memory terms

$$\hat{T} = c_0 + \sum_{m=0}^{M} \sum_{k,p} c_{kpm}(\phi[k-m])^p$$

$$+ \sum_{\theta=(k_1,k_2,p_1,p_2,m_1,m_2)} c_\theta(\phi[k_1-m_1])^{p_1}(\phi[k_2-m_2])^{p_2}$$

In certain embodiments, only immediate past measurements of impedance phase are used which corresponds to the memory depth parameter $M = 1$.

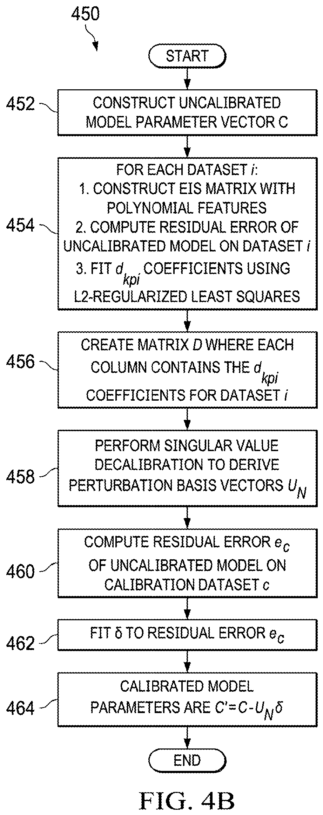

Referring now to FIG. 4B, in one embodiment, SVD calibration may be performed as illustrated in a flow diagram 450. First, in step 452, an uncalibrated model parameter vector C containing the model parameters $c_{kp}$ is constructed. In step 454, for each dataset i: (1) the EIS matrix $Z_i$ is constructed with polynomial features (rows are datapoints, columns are features); (2) the residual error $e_i$ of the uncalibrated model on dataset i is computed using the equation $e_i = Z_iC - T_{true,i}$; and (3) $d_{kpi}$ is fit using L2-regularized least squares ($e_i \approx Z_id_{kpi}$).

In step 456, a matrix D is created in which each column contains the $d_{kp}$ coefficients for dataset i. In step 458, SVD is then performed on $d_{kpi}$ as follows: (1) define D as $D = U\Sigma V^T$; (2) take the N most significant singular vectors from U and define them as perturbation basis vectors $U_N$. In step 460, the residual error of the uncalibrated model on the calibration dataset c is computed using the equation $e_c = Z_cC - T_{true,c}$. In step 462, $\delta$ is fit to $e_c$ using the equation $e_c \approx Z_cU_N\delta$. In step 464, the resulting calibrated model parameters C' are equal to C - $U_{N\delta}$.

In some embodiments described herein, $\delta$ represents the weights or coefficients applied to the basis vectors $U_N$ to create the perturbation vector to be applied to the model parameters or coefficients C. The basis vectors $U_N$ represent the typical ways that the model coefficients vary from battery to battery. $\delta$ is found using calibration data in order to determine how much of each basis vector should be used the perturb the model to better fit the calibration dataset.

When a battery is in steady-state (i.e., internal temperature similar to external temperature), a calibration measurement (Z, T) can be taken. Such calibration measurements may be accumulated over the lifetime of a battery to form the overall calibration dataset. Alternatively, a specific time window from the historical data may be used. Temperature estimation parameters can be recalibrated from this dataset using SVD calibration, as described above.

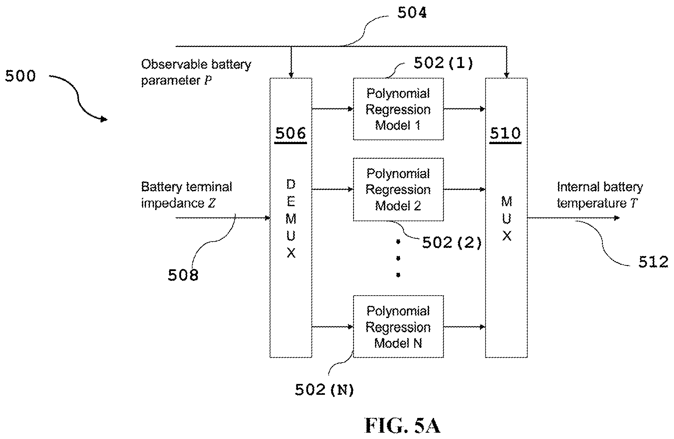

FIG. 5A is a block diagram illustrating an embodiment of a system 500 in which multiple different polynomial regression models 502(1) - 502(N) (similar to the model 314 (FIG. 3)) may be used to estimate an internal temperature T of a battery. In accordance with features of embodiments described herein, each of the polynomial regression models 502 is trained on data comprising measurements made for a different range of values of a selected measurable (directly or indirectly) battery parameter P. In certain embodiments, the battery parameter P may be the battery SOH (capacity) or battery SOC, for example. The value of the parameter P is used as a control signal 504 for an 1xN demultiplexer (DEMUX) 506 having N outputs connected to inputs of the N pre-trained polynomial regression models 502. In operation, a signal corresponding to a measured value (for example, battery terminal impedance, as shown in FIG. 5A) input 508 to the DEMUX 506 is switched by the DEMUX under the control of the value of battery parameter P on the control signal line 504 (which is connected to a SELECT input of the DEMUX) to the corresponding one of the pre-trained polynomial regression models 502. In accordance with features of embodiments described herein, parameters of the selected one of the models 502 have been pre-fit using data that corresponds to the designated range of values for P.

For example, in a case in which P represents the remaining battery capacity, the range for model 502(1) may be selected to correspond to 100% to 95% of the nominal battery capacity, the range for model 502(2) may be selected to correspond to 95% to 90% of the nominal battery capacity, and so on. In this example, if the value of control signal 504 of the DEMUX 506 (i.e., the parameter P) is within the interval (90%,95%) then the input signal 508 will be passed to regression model 502(2).

Correspondingly, an Nx1 multiplexer (MUX) 510 having N inputs connected to outputs of the models 502 is also controlled by the parameter P (i.e., the control line 504 is connected to a SELECT input of the MUX 510) such that an internal battery temperature estimate signal T output 512 from the MUX 510 comprises the output of the model 502 to which the parameter P corresponds (again, in the example above, the model 502(2)).

In certain embodiments, model selection may be triggered by more than one parameter. For example, classification of models used for temperature estimation may be accomplished by parsing the full range of both SOC and SOH metrics. In this case, the observable battery parameter P used as control signal 504 may be a 2-dimensional vector [P1,P2], where the first component P1 may correspond to the SOH metric and the second component P2 may correspond to the SOC metric. In this case, the DEMUX 506 would be implemented as an (NM)x1 demultiplexer and the MUX 510 would be implemented as an (NM)x1 multiplexer. Additionally, the group of models 502 would include NM models corresponding to N different ranges for remaining battery capacity (SOH) and M different ranges for battery state of charge (SOC). For example, the range for a first model , designated model [1, 1] may be selected to correspond to 100% to 95% of the nominal battery capacity and 100% to 90% of the battery state-of-charge, the range of a second model (model [1, 2]) may be selected to correspond to 100% to 95% of the nominal battery capacity and 90% to 80% of the battery state-of-charge, and so on, until the range of a tenth model (model [1, 10]) may be selected to correspond to 100% to 95% of the nominal battery capacity and 10% to 0% of the battery state-of-charge. In this example, if the values of control signal 504 of the DEMUX 506 (i.e., the parameter P=[P1,P2]) are within the interval (90%,95%) for P1 and (20%,10%) for P2, then the input signal 508 will be passed to a corresponding model (e.g., a ninth model (model [1, 9], using the numbering convention established in the foregoing example).

Additionally, model parameters learned using data from a first type of battery can be used to estimate temperature for a second (different) type of battery. In one embodiment, this may be accomplished by calibration of the model parameters of model 502, trained on battery data from the first type of battery, using impedance measurements of the targeted second type of battery. In another embodiment, this may be accomplished by first training a predistortion model, which transforms impedance measurements of the second type of battery into an impedance value of the first type of battery for which the model 502 was trained. Output of this predistortion model may then be fed into model 502 to generate an estimate of the internal temperature of the second type of battery. Parameters of the predistortion model may be trained on a small set of impedance measurement data of the second type of battery that is sufficient to train the predistortion model but not large enough to train a corresponding model 502 from scratch. The predistortion model may have other inputs besides battery impedance measurement, such as SOC and SOH metrics.

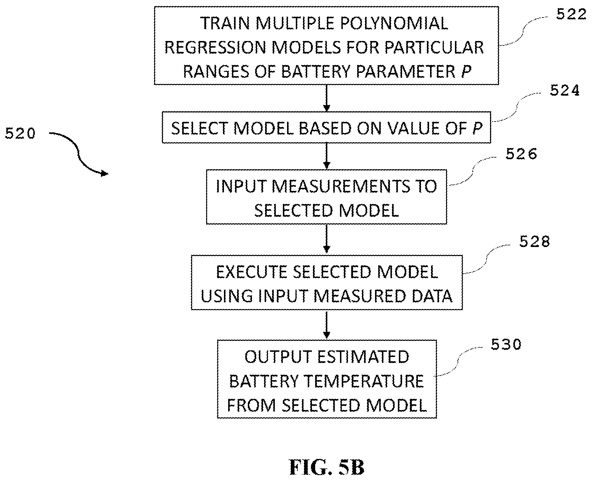

FIG. 5B is a flow diagram 520 illustrating an example operations for using multiple different polynomial regression models to estimate an internal temperature of a battery using impedance measurements in accordance with features of embodiments described herein.

In step 522, multiple polynomial regression models may be trained as described above. In accordance with features of embodiments described herein, each of the models is trained on data comprising measurements made for a different range of values of a selected measurable (directly or indirectly) battery parameter P.

In step 524, one of the models is selected based on the value of the battery parameter P. In particular, the model corresponding to the range of values in which P falls is selected.

In step 526, the measured data is input to the selected model. In particular, in certain embodiments, the measured terminal impedance data is input to the selected model.

In step 528, the selected model executes on the measured data input thereto.

In step 530, the estimated battery temperature is output from the selected model.

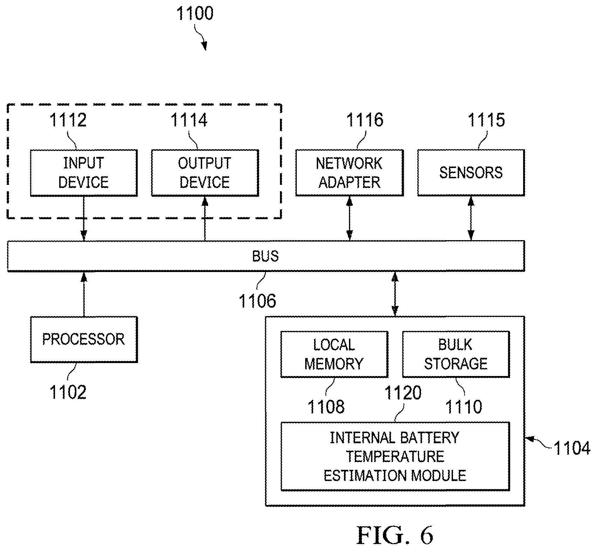

FIG. 6 is a block diagram illustrating an example system 1100 that may be configured to implement at least portions of techniques for internal battery temperature estimation using impedance measurements in accordance with embodiments described herein, and more particularly as shown in the FIGURES described hereinabove. As shown in FIG. 6, the system 1100 may include at least one processor 1102, e.g., a hardware processor 1102, coupled to memory elements 1104 through a system bus 1106. As such, the system may store program code and/or data within memory elements 1104. Further, the processor 1102 may execute the program code accessed from the memory elements 1104 via a system bus 1106. In one aspect, the system may be implemented as a computer that is suitable for storing and/or executing program code. It should be appreciated, however, that the system 1100 may be implemented in the form of any system including a processor and a memory that is capable of performing the functions described in this disclosure.

In some embodiments, the processor 1102 can execute software or an algorithm to perform the activities as discussed in this specification; in particular, activities related to internal battery temperature estimation using impedance measurements in accordance with embodiments described herein. The processor 1102 may include any combination of hardware, software, or firmware providing programmable logic, including by way of non-limiting example a microprocessor, a DSP, a field-programmable gate array (FPGA), a programmable logic array (PLA), an integrated circuit (IC), an application specific IC (ASIC), or a virtual machine processor. The processor 1102 may be communicatively coupled to the memory element 1104, for example in a direct-memory access (DMA) configuration, so that the processor 1102 may read from or write to the memory elements 1104.

In general, the memory elements 1104 may include any suitable volatile or non-volatile memory technology, including double data rate (DDR) random access memory (RAM), synchronous RAM (SRAM), dynamic RAM (DRAM), flash, read-only memory (ROM), optical media, virtual memory regions, magnetic or tape memory, or any other suitable technology. Unless specified otherwise, any of the memory elements discussed herein should be construed as being encompassed within the broad term "memory." The information being measured, processed, tracked, or sent to or from any of the components of the system 1100 could be provided in any database, register, control list, cache, or storage structure, all of which can be referenced at any suitable timeframe. Any such storage options may be included within the broad term "memory" as used herein. Similarly, any of the potential processing elements, modules, and machines described herein should be construed as being encompassed within the broad term "processor." Each of the elements shown in the present figures may also include suitable interfaces for receiving, transmitting, and/or otherwise communicating data or information in a network environment so that they can communicate with, for example, a system having hardware similar or identical to another one of these elements.

In certain example implementations, mechanisms for implementing internal battery temperature estimation using impedance measurements as outlined herein may be implemented by logic encoded in one or more tangible media, which may be inclusive of non-transitory media, e.g., embedded logic provided in an ASIC, in DSP instructions, software (potentially inclusive of object code and source code) to be executed by a processor, or other similar machine, etc. In some of these instances, memory elements, such as e.g., the memory elements 1104 shown in FIG. 6 can store data or information used for the operations described herein. This includes the memory elements being able to store software, logic, code, or processor instructions that are executed to carry out the activities described herein. A processor can execute any type of instructions associated with the data or information to achieve the operations detailed herein. In one example, the processors, such as e.g., the processor 1102 shown in FIG. 6, could transform an element or an article (e.g., data) from one state or thing to another state or thing. In another example, the activities outlined herein may be implemented with fixed logic or programmable logic (e.g., software/computer instructions executed by a processor) and the elements identified herein could be some type of a programmable processor, programmable digital logic (e.g., an FPGA, a DSP, an erasable programmable read-only memory (EPROM), an electrically erasable programmable read-only memory (EEPROM)) or an ASIC that includes digital logic, software, code, electronic instructions, or any suitable combination thereof.

The memory elements 1104 may include one or more physical memory devices such as, for example, local memory 1108 and one or more bulk storage devices 1110. The local memory may refer to RAM or other non-persistent memory device(s) generally used during actual execution of the program code. A bulk storage device may be implemented as a hard drive or other persistent data storage device. The processing system 1100 may also include one or more cache memories (not shown) that provide temporary storage of at least some program code in order to reduce the number of times program code must be retrieved from the bulk storage device 1110 during execution.

As shown in FIG. 6, the memory elements 1104 may store an internal battery temperature estimation module 1120. In various embodiments, the module 1120 may be stored in the local memory 1108, the one or more bulk storage devices 1110, or apart from the local memory and the bulk storage devices. It should be appreciated that the system 1100 may further execute an operating system (not shown in FIG. 6) that can facilitate execution of the module 1120. The module 1120, being implemented in the form of executable program code and/or data, can be read from, written to, and/or executed by the system 1100, e.g.., by the processor 1102. Responsive to reading from, writing to, and/or executing the module 1120, the system 1100 may be configured to perform one or more operations or method steps described herein.

Input/output (I/O) devices depicted as an input device 1112 and an output device 1114, optionally, may be coupled to the system. Examples of input devices may include, but are not limited to, a keyboard, a pointing device such as a mouse, or the like. Examples of output devices may include, but are not limited to, a monitor or a display, speakers, or the like. In some implementations, the system may include a device driver (not shown) for the output device 1114. Input and/or output devices 1112, 1114 may be coupled to the system 1100 either directly or through intervening I/O controllers. Additionally, sensors 1115, may be coupled to the system 1100 either directly or through intervening controllers and/or drivers.

In an embodiment, the input and the output devices may be implemented as a combined input/output device (illustrated in FIG. 6 with a dashed line surrounding the input device 1112 and the output device 1114). An example of such a combined device is a touch sensitive display, also sometimes referred to as a "touch screen display" or simply "touch screen." In such an embodiment, input to the device may be provided by a movement of a physical object, such as e.g., a stylus or a finger of a user, on or near the touch screen display.

A network adapter 1116 may also, optionally, be coupled to the system 1100 to enable it to become coupled to other systems, computer systems, remote network devices, and/or remote storage devices through intervening private or public networks. The network adapter may comprise a data receiver for receiving data that is transmitted by said systems, devices and/or networks to the system 1100, and a data transmitter for transmitting data from the system 1100 to said systems, devices and/or networks. Modems, cable modems, and Ethernet cards are examples of different types of network adapter that may be used with the system 1100.

Note that all optional features of the device and system described above may also be implemented with respect to the method or process described herein and specifics in the examples may be used anywhere in one or more embodiments.

The 'means for' in these instances (above) may include (but is not limited to) using any suitable component discussed herein, along with any suitable software, circuitry, hub, computer code, logic, algorithms, hardware, controller, interface, link, bus, communication pathway, etc.

## Claims

1. A method for estimating an internal temperature of a battery, the method comprising:

obtaining multiple terminal impedance measurements for the battery (101),
wherein each of the terminal impedance measurements is obtained at a different one of a plurality of frequencies;
the method being **characterized in that** it further comprises:

automatically selecting one of a plurality of battery models using a value of a parameter of the battery, wherein each of the battery models has been trained and corresponds to a different range of values for the battery parameter and wherein the value of the parameter of the battery falls within the range of values for the battery parameter corresponding to the selected one of the plurality of battery models; and
applying the selected one of the plurality of battery models to the multiple terminal impedance measurements to generate an estimate (103) of the internal temperature of the battery.

2. The method of claim 1, wherein each of the battery models comprises a multivariable polynomial regression model.

3. The method of claim 2, further comprising determining model parameters for the selected multivariable polynomial regression model.

4. The method of claim 3, wherein the determining model parameters comprises:

obtaining training data from a plurality of batteries; and
applying a linear least squares fit to the training data.

5. The method of claim 4, wherein the training data comprises AC impedance and temperature data, and wherein the method optionally further comprises calibrating the model parameters using at least one calibration measurement associated with the battery.

6. The method of any one of claims 1-5, wherein the battery comprises a rechargeable battery, optionally wherein the battery comprises a lithium-ion battery.

7. The method of any one of claims 1-5, wherein the frequencies are selected in order to cancel out at least one of state-of-charge, SOC, and state-of-health, SOH, dependencies.

8. The method of any one of claims 1-5, wherein the battery parameter comprises at least one of a state-of-health, SOH, and a state-of-charge, SOC, or
wherein the battery parameter comprises multiple battery parameters.

9. The method of any one of claims 1-5, wherein an equation comprising at least one of the battery models includes a function of another measurement of the battery, or
wherein an equation comprising at least one of the battery models includes a memory term.

10. A system for estimating an internal temperature of a battery from a plurality of terminal impedance measurements (101) obtained for the battery, wherein the terminal impedance measurements are taken at a plurality of frequencies, the system comprising:

a plurality of battery models;
the system **characterized in that** it further comprises:

circuitry for automatically selecting one of the plurality of battery models using a value of a parameter of the battery, wherein each of the battery models has been trained and corresponds to a different range of values for the battery parameter and wherein the value of the parameter of the battery falls within the range of values for the battery parameter corresponding to the selected one of the plurality of battery models;
wherein the selected one of the plurality of battery models is applied to the multiple terminal impedance measurements to generate an estimate (103) of the internal temperature of the battery.

11. The system of claim 10, wherein each of the battery models comprises a multivariable polynomial regression model.

12. The system of claim 10 or 11, wherein the battery comprises a rechargeable battery.

13. The system of any one of claims 10-12, wherein the battery parameter comprises at least one of a battery state-of-health, SOH, and a battery state-of-charge, SOC, or

wherein the battery parameter comprises a plurality of battery parameters.

14. The system of any one of claims 10-12, wherein the circuitry comprises a demultiplexer, DEMUX, having an input connected to receive the multiple terminal impedance measurements and *N* outputs connected to inputs of the N polynomial regression models, optionally wherein a SELECT input of the DEMUX is connected to receive a signal corresponding to the value of the battery parameter.

15. The system of any one of claims 10-12, wherein the circuitry comprises a multiplexer, MUX, having N inputs connected to receive outputs of the N polynomial regression models and an output for outputting an estimated internal temperature of the battery, optionally wherein a control input of the MUX is connected to receive a signal corresponding to the value of the battery parameter.

**Patentansprüche**

1. Verfahren zum Schätzung einer Innentemperatur einer Batterie, das Verfahren umfassend:

   Ermitteln mehrerer Anschlussimpedanzmessungen für die Batterie (101), wobei jede der Anschlussimpedanzmessungen bei einer anderen Frequenz aus einer Vielzahl von Frequenzen ermittelt wird;
   wobei das Verfahren **dadurch gekennzeichnet ist, dass** es weiter Folgendes umfasst:

   automatisches Auswählen eines aus einer Vielzahl von Batteriemodellen unter Verwendung eines Wertes eines Parameters der Batterie, wobei jedes der Batteriemodelle trainiert wurde und einem anderen Wertebereich für den Batterieparameter entspricht und wobei der Wert des Parameters der Batterie innerhalb des Wertebereichs für den Batterieparameter liegt, der dem ausgewählten aus der Vielzahl von Batteriemodellen entspricht; und
   Anwenden des ausgewählten Batteriemodells aus einer Vielzahl von Modellen auf die mehreren Anschlussimpedanzmessungen, um eine Schätzung (103) der Innentemperatur der Batterie zu erzeugen.

2. Verfahren nach Anspruch 1, wobei jedes der Batteriemodelle ein multivariables polynomiales Regressionsmodell umfasst.

3. Verfahren nach Anspruch 2, weiter umfassend das Bestimmen der Modellparameter für das ausgewählte multivariable polynomiale Regressionsmodell.

4. Verfahren nach Anspruch 3, wobei die bestimmenden Modellparameter Folgendes umfassen:

   Ermitteln von Trainingsdaten aus einer Vielzahl von Batterien; und
   Anwenden einer linearen Kleinste-Quadrate-Anpassung auf die Trainingsdaten.

5. Verfahren nach Anspruch 4, wobei die Trainingsdaten AC-Impedanz- und Temperaturdaten umfassen, und wobei das Verfahren weiter optional das Kalibrieren der Modellparameter unter Verwendung von mindestens einer der Batterie zugeordneten Kalibrierungsmessung umfasst.

6. Verfahren nach einem der Ansprüche 1 bis 5, wobei die Batterie eine wiederaufladbare Batterie umfasst, wobei die Batterie optional eine Lithium-Ionen-Batterie umfasst.

7. Verfahren nach einem der Ansprüche 1-5, wobei die Frequenzen so ausgewählt sind, dass mindestens eine Abhängigkeit vom Ladezustand, SOC, und/oder vom Gesundheitszustand, SOH, aufgehoben wird.

8. Verfahren nach einem der Ansprüche 1-5, wobei der Batterieparameter mindestens einen von einem Gesundheitszustand, SOH, und einem Ladezustand, SOC, umfasst, oder wobei der Batterieparameter mehrere Batterieparameter umfasst.

9. Verfahren nach einem der Ansprüche 1-5, wobei eine Gleichung, die mindestens eines der Batteriemodelle umfasst, eine Funktion einer anderen Messung der Batterie einschließt, oder wobei eine Gleichung, die mindestens eines der Batteriemodelle umfasst, einen Speicherbegriff einschließt.

**10.** System zur Schätzung einer Innentemperatur einer Batterie aus einer Vielzahl von für die Batterie ermittelten Anschlussimpedanzmessungen (101), wobei die Anschlussimpedanzmessungen bei einer Vielzahl von Frequenzen durchgeführt wird, wobei das System Folgendes umfasst:

eine Vielzahl von Batteriemodellen;
wobei das System **dadurch gekennzeichnet ist, dass** es weiter Folgendes umfasst:

Schaltung zum automatischen Auswählen eines der Vielzahl von Batteriemodellen anhand eines Wertes eines Parameters der Batterie, wobei jedes der Batteriemodelle trainiert wurde und einem anderen Wertebereich für den Batterieparameter entspricht, und wobei der Wert des Batterieparameters innerhalb des Wertebereichs liegt, der dem ausgewählten Batteriemodell entspricht;
wobei das ausgewählte Batteriemodell aus der Vielzahl der Batteriemodelle auf die mehreren Anschlussimpedanzmessungen angewendet wird, um eine Schätzung (103) der Innentemperatur der Batterie zu erzeugen.

**11.** System nach Anspruch 10, wobei jedes der Batteriemodelle ein multivariables polynomiales Regressionsmodell umfasst.

**12.** System nach Anspruch 10 oder **11,** wobei die Batterie eine wiederaufladbare Batterie umfasst.

**13.** System nach einem der Ansprüche 10-12, wobei der Batterieparameter mindestens einen von einem Batteriegesundheitszustand, SOH, und einem Batterieladezustand, SOC, umfasst, oder wobei der Batterieparameter eine Vielzahl von Batterieparametern umfasst.

**14.** System nach einem der Ansprüche 10-12, wobei die Schaltung einen Demultiplexer (DEMUX) umfasst, der einen Eingang zum Empfangen der mehreren Anschlussimpedanzmessungen und N Ausgänge aufweist, die mit den Eingängen der N polynomialen Regressionsmodelle verbunden sind, wobei optional ein SELECT-Eingang des DEMUX zum Empfangen eines Signals angeschlossen ist, das dem Wert des Batterieparameters entspricht.

**15.** System nach einem der Ansprüche 10-12, wobei die Schaltung einen Multiplexer (MUX) mit N Eingängen, die mit den Ausgängen der N polynomialen Regressionsmodelle verbunden sind, sowie einem Ausgang zum Ausgeben einer geschätzten Innentemperatur der Batterie umfasst, wobei ein Steuereingang des MUX optional angeschlossen ist, um ein Signal zu empfangen, das dem Wert des Batterieparameters entspricht.

**Revendications**

**1.** Procédé d'estimation d'une température interne d'une batterie, le procédé comprenant :

l'obtention de multiples mesures d'impédance aux bornes de la batterie (101), dans lequel chacune des mesures d'impédance aux bornes est obtenue à une fréquence différente parmi une pluralité de fréquences ;
le procédé étant **caractérisé en ce qu'**il comprend en outre :

la sélection automatique d'un modèle de batterie d'une pluralité de modèles de batterie en utilisant une valeur d'un paramètre de la batterie, dans lequel chacun des modèles de batterie a été entraîné et correspond à une plage différente de valeurs pour le paramètre de batterie, et dans lequel la valeur du paramètre de la batterie se situe dans la plage de valeurs pour le paramètre de batterie correspondant au modèle de batterie sélectionné de la pluralité de modèles de batterie ; et
l'application du modèle de batterie sélectionné de la pluralité de modèles de batterie aux multiples mesures d'impédance aux bornes pour générer une estimation (103) de la température interne de la batterie.

**2.** Procédé selon la revendication 1, dans lequel chacun des modèles de batterie comprend un modèle de régression polynomiale multivariable.

**3.** Procédé selon la revendication 2, comprenant en outre la détermination de paramètres de modèle pour le modèle de régression polynomiale multivariable sélectionné.

**4.** Procédé selon la revendication 3, dans lequel la détermination de paramètres de modèle comprend :

l'obtention de données d'entraînement provenant d'une pluralité de batteries ; et
l'application d'un ajustement linéaire par les moindres carrés aux données d'entraînement.

5. Procédé selon la revendication 4, dans lequel les données d'entraînement comprennent une impédance en CA et des données de température, et dans lequel le procédé comprend en outre facultativement l'étalonnage des paramètres de modèle en utilisant au moins une mesure d'étalonnage associée à la batterie.

6. Procédé selon l'une quelconque des revendications 1 à 5, dans lequel la batterie comprend une batterie rechargeable, facultativement dans lequel la batterie comprend une batterie au lithium-ion.

7. Procédé selon l'une quelconque des revendications 1 à 5, dans lequel les fréquences sont sélectionnées afin d'annuler au moins l'une des dépendances à l'état de charge, SOC, et à l'état de santé, SOH.

8. Procédé selon l'une quelconque des revendications 1 à 5, dans lequel le paramètre de batterie comprend au moins l'un parmi un état de santé, SOH, et un état de charge, SOC, ou dans lequel le paramètre de batterie comprend de multiples paramètres de batterie.

9. Procédé selon l'une quelconque des revendications 1 à 5, dans lequel une équation comprenant au moins l'un des modèles de batterie inclut une fonction d'une autre mesure de la batterie, ou dans lequel une équation comprenant au moins l'un des modèles de batterie comprend un terme de mémoire.

10. Système d'estimation d'une température interne d'une batterie à partir d'une pluralité de mesures (101) d'impédance aux bornes obtenues pour la batterie, dans lequel les mesures d'impédance aux bornes sont prises à une pluralité de fréquences, le système comprenant :

une pluralité de modèles de batterie ;
le système étant **caractérisé en ce qu'**il comprend en outre :

une circuiterie pour la sélection automatique d'un modèle de batterie de la pluralité de modèles de batterie en utilisant une valeur d'un paramètre de la batterie, dans lequel chacun des modèles de batterie a été entraîné et correspond à une plage différente de valeurs pour le paramètre de batterie, et dans lequel la valeur du paramètre de la batterie se situe dans la plage de valeurs pour le paramètre de batterie correspondant au modèle de batterie sélectionné de la pluralité de modèles de batterie ;
dans lequel le modèle de batterie sélectionné de la pluralité de modèles de batterie est appliqué aux multiples mesures d'impédance aux bornes pour générer une estimation (103) de la température interne de la batterie.

11. Système selon la revendication 10, dans lequel chacun des modèles de batterie comprend un modèle de régression polynomiale multivariable.

12. Système selon la revendication 10 ou la revendication 11, dans lequel la batterie comprend une batterie rechargeable.

13. Système selon l'une quelconque des revendications 10 à 12, dans lequel le paramètre de batterie comprend au moins l'un parmi un état de santé, SOH, de batterie et un état de charge, SOC, de batterie ou dans lequel le paramètre de batterie comprend une pluralité de paramètres de batterie.

14. Système selon l'une quelconque des revendications 10 à 12, dans lequel la circuiterie comprend un démultiplexeur, DEMUX, présentant une entrée connectée pour recevoir les multiples mesures d'impédance aux bornes et N sorties connectées à des entrées des N modèles de régression polynomiale, facultativement dans lequel une entrée SELECT du DEMUX est connectée pour recevoir un signal correspondant à la valeur du paramètre de batterie.

15. Système selon l'une quelconque des revendications 10 à 12, dans lequel la circuiterie comprend un multiplexeur, MUX, présentant N entrées connectées pour recevoir des sorties des N modèles de régression polynomiale et une sortie pour délivrer une température interne estimée de la batterie, facultativement dans lequel une entrée de commande du MUX est connectée pour recevoir un signal correspondant à la valeur du paramètre de batterie.

FIG. 1A

FIG. 1B

LITHIUM-ION BATTERIES
FOR TRAINING
204

200

AC IMPEDANCE/
TEMPERATURE
TRAINING DATA — 202

LEAST SQUARES FIT

MODEL
PARAMETERS $c_{kp}$ — 206

REGRESSION:
$\hat{T} = f(Z, c_{kp})$
208

TEMPERATURE
ESTIMATE

210
DUT
(SAME MODEL)

212

FIG. 2

FIG. 3

FIG. 4A

EP 4 323 737 B1

450

START

452 — CONSTRUCT UNCALIBRATED
MODEL PARAMETER VECTOR C

454 —
FOR EACH DATASET $i$:
1. CONSTRUCT EIS MATRIX WITH
POLYNOMIAL FEATURES
2. COMPUTE RESIDUAL ERROR OF
UNCALIBRATED MODEL ON DATASET $i$
3. FIT $d_{kpi}$ COEFFICIENTS USING
L2-REGULARIZED LEAST SQUARES

456 —
CREATE MATRIX $D$ WHERE EACH
COLUMN CONTAINS THE $d_{kpi}$
COEFFICIENTS FOR DATASET $i$

458 —
PERFORM SINGULAR VALUE
DECALIBRATION TO DERIVE
PERTURBATION BASIS VECTORS $U_N$

460 —
COMPUTE RESIDUAL ERROR $e_c$
OF UNCALIBRATED MODEL ON
CALIBRATION DATASET $c$

462 — FIT δ TO RESIDUAL ERROR $e_c$

464 —
CALIBRATED MODEL
PARAMETERS ARE $C'=C-U_N\delta$

END

FIG. 4B

FIG. 5A

```
┌─────────────────────────────────┐
│   TRAIN MULTIPLE POLYNOMIAL      │ ── 522
│  REGRESSION MODELS FOR PARTICULAR│
│   RANGES OF BATTERY PARAMETER P  │
└─────────────────────────────────┘
              │
              ▼
┌─────────────────────────────────┐ ── 524
│   SELECT MODEL BASED ON VALUE OF P│
└─────────────────────────────────┘
              │
              ▼
┌─────────────────────────────────┐ ── 526
│    INPUT MEASUREMENTS TO         │
│       SELECTED MODEL             │
└─────────────────────────────────┘
              │
              ▼
┌─────────────────────────────────┐ ── 528
│     EXECUTE SELECTED MODEL       │
│    USING INPUT MEASURED DATA     │
└─────────────────────────────────┘
              │
              ▼
┌─────────────────────────────────┐ ── 530
│     OUTPUT ESTIMATED             │
│    BATTERY TEMPERATURE           │
│    FROM SELECTED MODEL           │
└─────────────────────────────────┘
```

520

**FIG. 5B**

FIG. 6

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013314049 A1